Europäisches Patentamt

European Patent Office

Office européen des brevets

(19)

(11) Veröffentlichungsnummer: **0 053 826**
**B1**

(12)

# EUROPÄISCHE PATENTSCHRIFT

(45) Veröffentlichungstag der Patentschrift:
03.10.84

(51) Int. Cl.³: **B 23 B 29/034**

(21) Anmeldenummer: **81110193.0**

(22) Anmeldetag: **05.12.81**

(54) **Antriebseinrichtung für die radiale Verstellung eines Bohrwerkzeugs.**

(30) Priorität: **08.12.80 DE 3046210**

(43) Veröffentlichungstag der Anmeldung:
**16.06.82 Patentblatt 82/24**

(45) Bekanntmachung des Hinweises auf die Patenterteilung:
**03.10.84 Patentblatt 84/40**

(84) Benannte Vertragsstaaten:
**FR GB IT SE**

(56) Entgegenhaltungen:
**DE - A - 2 124 657**
**FR - A - 2 315 349**
**GB - A - 990 967**
**US - A - 2 734 402**
**US - A - 4 009 968**

(73) Patentinhaber: **Santrade Ltd., Alpenquai 12,
CH-6002 Luzern (CH)**

(72) Erfinder: **Kaminsky, Theo, Südring 5, D-6102 Pfungstadt
(DE)**

(74) Vertreter: **Katscher, Helmut, Dipl.-Ing.,
Bismarckstrasse 29, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Antriebseinrichtung für die radiale Verstellung eines Bohrwerkzeugs in einem Bohrkopf nach dem Oberbegriff des Patentanspruchs.

Die radiale Verstellung eines Bohrwerkzeugs in einem Bohrkopf dient dazu, das Bohrwerkzeug am Ende eines Bearbeitungsvorgangs von der bearbeiteten Oberfläche abzuheben, damit es bei der Rückzugsbewegung keine Riefen auf der bearbeiteten Oberfläche hinterlässt. Ausserdem dient diese Einrichtung dazu, eine radiale Nachstellung des Bohrwerkzeugs zur Kompensation eines am Bohrwerkzeug aufgetretenen Schneidenverschleisses vorzunehmen. Durch diese Kompensation des Schneidenverschleisses wird es ermöglicht, die Standzeit eines Bohrwerkzeugs wesentlich zu erhöhen, weil diese Standzeit im allgemeinen dadurch bestimmt wird, dass die infolge des Schneidenverschleisses eintretende Massänderung der bearbeiteten Oberfläche das zulässige Toleranzfeld verlässt.

Den meisten Ausführungsformen der Einrichtungen für die radiale Verstellung der Bohrwerkzeuge in einem Bohrkopf ist gemeinsam, dass eine zentrisch im Bohrkopf angeordnete Schubstange, die sich durch die den Bohrkopf aufnehmende Werkzeugmaschinenspindel erstreckt, über eine Schrägfläche mittelbar oder unmittelbar auf das Bohrwerkzeug einwirkt, um dieses radial zu verstellen. Die Schubstange dreht sich mit dem Bohrkopf und der Werkzeugmaschinenspindel (DE-OS 2 405 694). Der axiale Antrieb der Schubstange erfolgt bei einer bekannten Antriebseinrichtung (DE-AS 2 167 082) durch einen Drehantriebsmotor, der mit der Gewindespindel über eine Längsverschiebungen zulassende Drehkupplung verbunden ist. Die mit der Gewindespindel in Eingriff stehende Gewindemutter ist gestellfest gelagert. Das dem Drehantriebsmotor abgekehrte Ende der Gewindespindel ist über ein Axiallager mit der Schubstange verbunden.

Bei Antriebseinrichtungen, bei denen der Drehantriebsmotor nicht mit der Längsachse der Gewindespindel fluchtet, sondern mit dazu kreuzender Achse (US-PS 3 286 556) oder mit parallel dazu verlaufender Achse angeordnet ist (FR-PS 2 327 840), sind die seitlichen Abmessungen bzw. der Durchmesser verhältnismässig gross, während die axiale Länge der Antriebseinrichtung verhältnismässig gering ist.

Im Gegensatz dazu wird bei einer bekannten Antriebseinrichtung nach dem Oberbegriff des Patentanspruchs (US-PS 4 009 968) zwar ein geringer Durchmesser der Vorrichtung erreicht, jedoch ist die axiale Länge verhältnismässig gross; die axiale Länge ist unter anderem dadurch bedingt, dass die in der zurückgezogenen Endstellung der Gewindemutter über die Gewindemutter hinausragende Länge der Gewindespindel mindestens dem erzielbaren axialen Verschiebeweg entsprechen muss.

Aufgabe der Erfindung ist es daher, eine Antriebseinrichtung der eingangs genannten Art so auszubilden, dass bei gleichachsiger Bauweise und damit geringen seitlichen Abmessungen eine möglichst geringe axiale Baulänge erreicht wird.

Diese Aufgabe wird erfindungsgemäss dadurch gelöst, dass das freie Ende der Gewindespindel in eine Bohrung am Ende der Antriebsstange ragt.

Der aus der Gewindemutter herausragende Teil der Gewindespindel muss zwar auch hierbei eine Länge aufweisen, die mindestens gleich dem vorgebenen Verschiebeweg ist; hierdurch wird die axiale Baulänge aber nicht vergrössert, weil dieser Teil der Gewindespindel in die Bohrung am Ende der Antriebsstange ragt. Das hintere Ende der Antriebsstange kann daher ohne Rücksicht auf den vorgegebenen Verschiebeweg in geringer axialer Entfernung zur Gewindemutter liegen.

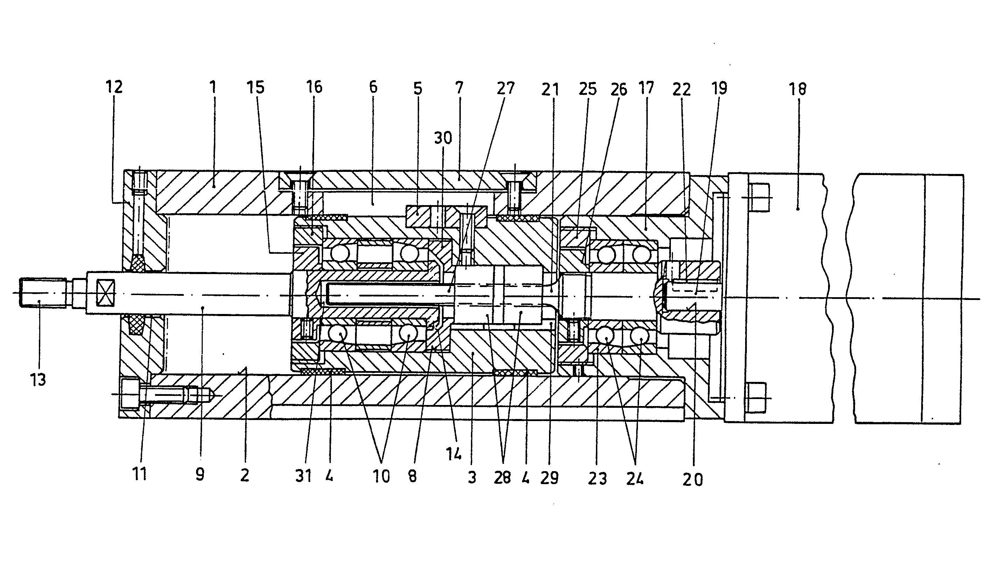

Die Erfindung wird nachfolgend an einem Ausführungsbeispiel näher erläutert, das in der Zeichnung dargestellt ist.

Die Zeichnung zeigt im Längsschnitt eine Antriebseinrichtung für die radiale Verstellung eines Bohrwerkzeugs in einem (nicht dargestellten) Bohrkopf. In einem Gehäuse 1, das eine zylindrische Längsbohrung 2 aufweist, ist ein Schubkörper 3, der an seinen beiden Enden Gleitbüchsen 4 trägt, axial verschiebbar angeordnet. Eine mit dem Schubkörper 3 verschraubte Passfeder 5 ist in einem Längsschlitz 6 des Gehäuses 1 geführt, der nach aussen durch einen Deckel 7 verschlossen ist.

In einer abgesetzten Bohrung 8 des Schubkörpers 3 ist eine Antriebsstange 9 in einem Axiallager gelagert, das zwei axial gegeneinander verspannte Wälzlager 10 aufweist.

Die Antriebsstange 9 ragt durch eine Bohrung 11 in einer mit dem Gehäuse 1 verschraubten Stirnplatte 12 und weist an ihrem äusseren Ende einen Gewindeansatz 13 auf, mit dem sie an einer axial verschiebbaren Schubstange des Bohrkopfs befestigt werden kann. An ihrem anderen Ende hat die Antriebsstange 9 einen Bund 14, an dem der Innenring des einen Axialwälzlagers 10 anliegt. Der Innenring des anderen Axialwälzlagers 10 wird durch eine auf die Antriebsstange 9 aufgeschraubte Mutter 15 gehalten. Eine in die Bohrung 8 eingeschraubte Ringmutter 16 verspannt die Aussenringe der Wälzlager 10 spielfrei gegeneinander.

An dem der Antriebsstange 9 entgegengesetzten Ende des Gehäuses 1 ist in der Längsbohrung 2 ein abgesetzter Einsatz 17 aufgenommen, an dem ein Drehantriebsmotor 18, beispielsweise ein Schrittmotor, angeflanscht ist. Die Ausgangswelle 19 des Motors 18 greift in eine Sackbohrung 20 am äusseren Ende einer Gewindespindel 21. Eine Passfeder 22 dient der Drehübertragung von der Ausgangswelle 19 auf die Gewindespindel 21.

In einer Bohrung 23 des Einsatzes 17 ist ein Axiallager, das aus zwei Wälzlagern 24 besteht, mittels einer Ringmutter 25 festgelegt. Eine Mutter 26 hält die Wälzlager 24 auf der Gewindespindel 21. Ein mit Gewinde versehener Abschnitt 27 der Gewindespindel 21 ragt durch eine Gewindemutter 28, die im Schubkörper 3 zwischen einem Bund 29 am motorseitigen Ende des Schubkörpers 3 und einem eingelegten Ring 30 festgelegt ist, der in der Bohrung 8 durch die Aussenringe des Axiallagers 10 gehalten wird.

Das freie Ende des Gewindeabschnitts 27 der Gewindespindel 21 ragt in eine Bohrung 31 am motorseitigen Ende der Antriebsstange 9.

Wie man aus der Zeichnung erkennt, sind der Motor 18, die Gewindespindel 21 und die Antriebsstange 9 gleichachsig angeordnet.

Die mit dem Gewindeabschnitt 27 der Gewindespindel 21 in Eingriff stehende Gewindemutter 28 kann beispielsweise aus zwei Muttern bestehen, die zur Erzielung der Spielfreiheit axial gegeneinander verspannt sind. Die Gewindespindel 21 mit der zugehörigen Gewindemutter 28 kann beispielsweise auch als Kugelumlaufspindel ausgeführt sein. Bei dem dargestellten Ausführungsbeispiel ist der Gewindetrieb 21, 28 als Planeten-Rollenspindel ausgeführt. Dabei sind in der Mutter 28 mehrere Gewinderollen planetenartig um den Gewindeabschnitt 27 der Gewindespindel 21 angeordnet und wälzen sich gleichzeitig an dem Gewindeabschnitt 27 der Gewindespindel 21 und an einem Innengewinde der Mutter 28 ab.

Wenn der Motor 18 die Gewindespindel 21 zu einer Drehbewegung antreibt, wird die Gewindemutter 28 und damit auch der Schubkörper 3 und die Antriebsstange 9 axial nach vorn (nach links in der Figur) verschoben, bis die Stirnfläche des Schubkörpers 3 die strichpunktiert angedeutete Stellung vor dem Deckel 12 erreicht hat. Der Schubkörper 3 ist dabei undrehbar im Gehäuse 1 geführt; die im Schubkörper 3 gelagerte Antriebsstange 9 dreht sich mit der den Bohrkopf tragenden Werkzeugmaschinenspindel.

Anstelle des gesonderten Axiallagers 24 für die Gewindespindel 21 kann auch das ohnehin im Motor 18 vorhandene Lager als Axiallager für die Gewindespindel 21 verwendet werden. Dadurch wird eine weitere Verringerung der Baulänge erreicht.

**Patentanspruch**

Antriebseinrichtung für die radiale Verstellung eines Bohrwerkzeugs in einem Bohrkopf mittels einer axial bewegbaren Schubstange, mit einer mit der Ausgangswelle (19) eines Drehantriebsmotors (18) gleichachsig verbundenen Gewindespindel (21), die über ein Axiallager (24) in einem Gehäuse (1) gelagert ist und mit einer Gewindemutter (28) in Eingriff steht, die in einem im Gehäuse (1) längsverschiebbaren Schubkörper (3) befestigt ist, und mit einer mit der Schubstange verbindbaren, drehbaren Antriebsstange (9), die im Schubkörper (3) in einem Axiallager (10) gelagert ist, dadurch gekennzeichnet, dass das freie Ende der Gewindespindel (21) in eine Bohrung (31) am Ende der Antriebsstange (9) ragt.

**Claim**

A drive means for the radial adjustment of a boring tool in a boring head by means of an axially movable push rod, with a threaded spindle (21) which is connected coaxially with the output shaft (19) of a rotary drive motor (18), which spindle is mounted via an axial bearing (24) in a housing (1) and is in engagement with a threaded nut (28) which is secured in a slide body (3) longitudinally displaceable in the housing (1), and with a rotatable drive rod (9) which can be connected with the push rod and which is mounted in the slide body (3) in an axial bearing (10), characterised in that the free end of the threaded spindle (21) projects into a bore (31) at the end of the drive rod (9).

**Revendication**

Dispositif d'entraînement pour l'adjustement radial d'un outil de forage dans une tête de forage au moyen d'un poussoir déplaçable axialement, comportant une broche filetée (21) accouplée selon un même axe à l'arbre de sortie (19) d'un moteur d'entraînement en rotation (18), ladite broche filetée (21) étant logée, via un palier axial (24), dans un boîtier (1) et étant en interaction avec un écrou (28) qui est fixé dans un élément coulissant (3) qui peut se déplacer longitudinalement dans le boîtier (1), ainsi qu'une tige d'entraînement rotative (9) qui peut être reliée au poussoir et qui est logée dans l'élément coulissant (3), dans un palier axial (10), caractérisé en ce que l'extrémité libre de la broche filetée (21) s'engage dans un alésage (31) pratiqué à l'extrémité de la tige d'entraînement (9).

0 053 826

5